# FASCICULE DE BREVET EUROPEEN

(11) **EP 2 933 767 B1**
(45) Date de publication et mention de la délivrance du brevet: **05.06.2019**
(21) Numéro de dépôt: 15163461.5
(22) Date de dépôt: 14.04.2015
(51) Int. Cl.: G06Q 20/20, G06Q 20/32, G06Q 20/38

(54) **PROCÉDÉ DE DÉSACTIVATION D'UN MODULE DE PAIEMENT, PRODUIT PROGRAMME D'ORDINATEUR, MEDIUM DE STOCKAGE ET MODULE DE PAIEMENT CORRESPONDANTS**
DEAKTIVIERUNGSVERFAHREN EINES ZAHLUNGSMODULS, ENTSPRECHENDES COMPUTERPROGRAMMPRODUKT, SPEICHERMEDIUM UND ZAHLUNGSMODUL
METHOD FOR DEACTIVATING A PAYMENT MODULE, CORRESPONDING COMPUTER PROGRAM PRODUCT, STORAGE MEDIUM AND PAYMENT MODULE

(30) Priorité: 18.04.2014 FR 1453543
(43) Date de publication de la demande: 21.10.2015
(73) Titulaire: Ingenico Group, 75015 Paris (FR)
(72) Inventeur: NACCACHE, David, 75018 PARIS (FR); QUENTIN, Pierre, 95880 ENGHIEN-LES-BAINS (FR); GHILIOTTO-YOUNG, Dorina, 75014 PARIS (FR); BRIER, Eric M., 26000 VALENCE (FR)
(74) Mandataire: Vidon Brevets & Stratégie

(56) Documents cités:
- WO-A1-2010/050652
- US-A1- 2010 332 387
- US-A1- 2011 270 741
- US-A1- 2013 124 346

## Description

### 1 DOMAINE DE L'INVENTION

La présente invention se rapporte au domaine de la désactivation définitive d'un module de paiement, et plus particulièrement d'un module de paiement rattachable (par exemple connecté ou intégré) à un terminal de communication.

### 2 SOLUTIONS DE L'ART ANTERIEUR

La désactivation d'un module de paiement rattachable à un terminal de communication doit permettre de garantir une sécurité maximale d'utilisation de ce module de paiement, en empêchant toute utilisation ultérieure d'un tel module de paiement désactivé et en empêchant tout accès à des données sensibles précédemment utilisées ou stockées par un tel module de paiement désactivé.

Par exemple, lorsqu'un module de paiement est intégré à un terminal de communication d'un utilisateur, celui-ci peut requérir la désactivation définitive du module de paiement, avant de se séparer (prêter ou vendre) de son terminal de communication, de façon à ce qu'un tiers ne puisse pas avoir accès à des données sensibles (par exemple son numéro de carte bancaire) préalablement utilisées ou stockées par le module de paiement.

Une solution classique (voir par example US2011/0270741) consiste à effacer toute la mémoire du module de paiement lorsque l'on souhaite désactiver ce dernier, de façon à en empêcher son fonctionnement ultérieur et à empêcher l'accès à des données stockées dans cette mémoire. Un programme logiciel peut ensuite être utilisé pour vérifier que la mémoire a bien été effacée.

En revanche, un inconvénient majeur de cette solution réside dans l'impossibilité de s'assurer qu'un programme frauduleux n'a pas « pris la main » pour simuler cet effacement de la mémoire, ainsi que la vérification ultérieure.

Il existe donc un besoin pour une solution permettant de s'assurer que le module de paiement est définitivement désactivé et qu'aucune donnée sensible n'est accessible dès lors que le module de paiement est désactivé.

### 3 RESUME DE L'INVENTION

L'invention concerne un procédé de désactivation d'un module de paiement rattachable à un terminal de communication, comprenant les deux phases suivantes :
- une phase de désactivation comprenant au moins une étape d'effacement de toute la mémoire du module de paiement, à l'exception d'une zone de mémoire non volatile dans laquelle est stockée une clé de cryptage *k*, ladite mémoire effacée étant dite mémoire principale et ladite clé de cryptage *k* n'étant disponible que lorsque la mémoire principale du module de paiement est vide ;
- au moins une phase de vérification de la désactivation comprenant les étapes suivantes :
   ∘ une étape de vérification que la mémoire principale est vide, délivrant un résultat de vérification positif ou négatif ;
   ∘ si le résultat de vérification est positif :
      ▪ une étape de calcul d'une réponse à un défi préalablement reçu par le module de paiement en provenance d'une entité distincte du module de paiement, le calcul étant mis en oeuvre à l'aide de la clé de cryptage *k* ;
      ▪ une étape de transmission de la réponse à l'entité.

Ainsi, selon ses différents modes de réalisation, l'invention propose une solution nouvelle et inventive de désactivation d'un module de paiement rattachable à un terminal de communication, permettant de s'assurer de manière sécurisée que le module a bien été désactivé et qu'il n'est donc plus utilisable, et que toutes les données sensibles qu'il avait précédemment pu utiliser ou stocker ont été réellement effacées de la mémoire du module désactivé.

Pour ce faire, le processus de désactivation comporte deux phases successives : une phase de désactivation proprement dite du module de paiement, qui consiste à effacer la mémoire principale du module de paiement, et une phase de vérification de la désactivation. Cette seconde phase de vérification de la désactivation est sécurisée et garantit la désactivation du module de paiement, car elle met en oeuvre un paramètre particulier, noté clé de cryptage *k*, stocké dans une partie spécifique non volatile de la mémoire du module de paiement et n'étant accessible, via une commande d'utilisation, que lorsque tout le reste de la mémoire (noté mémoire principale) du module de paiement a été effacée.

Ainsi, si la mémoire principale n'est pas complètement effacée, la phase de vérification échoue car la commande d'utilisation de la clé de cryptage *k* nécessaire à cette vérification n'est pas disponible.

En effet, la phase de vérification comprend d'abord une étape de vérification que la mémoire principale est vide, par exemple en utilisant un programme connu de vérification du contenu d'une mémoire, délivrant un résultat de vérification, positif ou négatif.

Si ce résultat est positif, la phase de vérification comprend ensuite une étape de calcul d'une réponse à un défi transmis au module de paiement par une entité distincte. Ce calcul d'une réponse au défi reçu utilise la clé de cryptage *k*, rendue accessible par l'effacement de la mémoire principale du module de paiement. Cette réponse au défi est alors transmise, par le module de paiement, à l'entité distincte ayant transmis le défi. Cette entité peut alors valider que la désactivation du module de paiement est effective, en vérifiant que la réponse au défi est correcte.

Si le résultat de vérification est négatif, la clé de cryptage *k* n'est pas accessible et il convient alors de tenter à nouveau d'effacer la mémoire principale du module de paiement.

Il est à noter que la phase de vérification peut être réitérée, par exemple lorsque l'on souhaite vérifier, quelque temps après la désactivation définitive d'un module de paiement, que celui-ci n'a pas été réactivé de manière frauduleuse.

Selon une caractéristique de l'invention, la phase de désactivation est déclenchée par la réception par le module de paiement d'au moins une requête de désactivation reçue en provenance de l'entité.

La désactivation d'un tel module de paiement est le plus souvent requise par l'utilisateur de ce module de paiement, par l'intermédiaire de son terminal de communication, par exemple lorsqu'il envisage de prêter ou vendre son terminal de communication. Dans ce cas, l'utilisateur requiert la désactivation du module de paiement via l'application dédiée à l'administration de ce module de paiement. L'entité distincte requérant la désactivation du module de paiement correspond alors à cette application d'administration du module de paiement, et le résultat de cette phase de vérification de la désactivation du module de paiement peut alors être transmise au serveur sécurisé intermédiaire (serveur passerelle) en charge de l'établissement d'un lien sécurisé entre le module de paiement et le serveur marchand, dans le cadre d'un paiement à distance.

Il se peut également que la désactivation du module de paiement soit nécessaire lorsqu'une utilisation frauduleuse de ce module de paiement est détectée, par exemple directement par le serveur intermédiaire sécurisé, qui constitue dans ce cas l'entité distincte requérant la désactivation du module de paiement.

En particulier, la clé de cryptage *k* stockée dans la mémoire non volatile du module de paiement n'est jamais accessible en lecture.

Ainsi, la clé de cryptage *k* ne peut jamais être utilisée frauduleusement pour transmettre une réponse à un défi lorsque la mémoire principale du module de paiement n'est pas totalement vide. En effet, n'étant jamais accessible en lecture, elle ne peut être « récupérée » à aucun moment, en vue d'une utilisation ultérieure pour simuler un fonctionnement normal de réponse à un défi.

Ceci constitue une double sécurité avec la caractéristique consistant à ne rendre utilisable cette clé de cryptage *k* que lorsque la mémoire principale du module de paiement est réellement vide.

Ainsi, non seulement la commande d'utilisation de la clé de cryptage *k* n'est disponible que lorsque la mémoire principale du module de paiement est vide, mais la clé de cryptage elle-même n'est jamais accessible en lecture (elle ne peut être utilisée que via sa commande pour le calcul d'une réponse à un défi).

Selon un aspect particulier de l'invention, le calcul d'une réponse à un défi utilise également au moins une donnée représentative de la requête de désactivation, l'information appartenant au groupe comprenant :
- un identifiant de l'entité ;
- un horodatage de la requête de désactivation.

Ainsi, le calcul de la réponse au défi tient également compte de données concernant la requête de désactivation. Par exemple, les données chiffrées par la clé de cryptage *k* sont constituées non seulement du défi mais également d'un identifiant de l'entité ayant requis la désactivation, ainsi que de la date et l'heure de cette requête de désactivation. Cela permet une vérification supplémentaire, au niveau de l'entité (par exemple le serveur passerelle) recevant la réponse au défi, de l'authenticité de cette réponse.

Selon un mode de réalisation particulier de l'invention, la phase de désactivation est déclenchée après une étape de validation de l'autorisation de l'entité à désactiver le module de paiement.

Un contrôle préalable est donc également mis en oeuvre pour s'assurer que l'entité requérant la désactivation du module de paiement est bien autorisée à le faire. Si cette vérification est positive, alors les phases de désactivation et de vérification sont mises en oeuvre.

L'invention concerne également un module de paiement rattachable à un terminal de communication, comprenant des moyens de désactivation comprenant :
- des moyens d'effacement de toute la mémoire du module de paiement, dite mémoire principale, à l'exception d'une zone de mémoire non volatile dans laquelle est stockée une clé de cryptage *k,* la clé de cryptage *k* n'étant disponible que lorsque la mémoire principale du module de paiement est vide ;
- des moyens de vérification que la mémoire principale est vide, délivrant un résultat de vérification positif ou négatif ;
- des moyens de calcul d'une réponse à un défi préalablement reçu par le module de paiement en provenance d'une entité distincte du module de paiement, le calcul étant mis en oeuvre à l'aide de la clé de cryptage *k*, les moyens de calcul étant activés par un résultat de vérification positif ;
- des moyens de transmission de la réponse à l'entité.

L'invention concerne également un programme d'ordinateur téléchargeable depuis un réseau de communication et/ou stocké sur un support lisible par ordinateur et/ou exécutable par un processeur, comprenant des instructions de code de programme pour l'exécution du procédé tel que décrit précédemment, lorsqu'il est exécuté par un processeur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

Enfin, l'invention concerne un médium de stockage, ou support d'informations, lisible par ordinateur et non transitoire, stockant un programme d'ordinateur comprenant un jeu d'instructions exécutables par un ordinateur ou un processeur pour mettre en oeuvre le procédé tel que décrit précédemment. Le support d'informations peut correspondre à n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut correspondre à un circuit intégré dans lequel le programme est incorporé, le circuit étant adapté pour exécuter ou pour être utilisé dans l'exécution du procédé en question.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes d'un procédé de désactivation d'un module de paiement selon un premier mode de réalisation de l'invention ;
- les figures 2a et 2b illustrent un exemple de module de paiement selon un mode de réalisation de l'invention.

### 5 DESCRIPTION DETAILLEE DE L'INVENTION

### 5.1 Principe général

Le principe de l'invention consiste à fournir une technique de désactivation vérifiable d'un module de paiement rattachable à un terminal de communication, permettant de s'assurer que le module est définitivement désactivé, dans le sens où il n'est plus utilisable pour une opération de paiement et où les éventuelles données sensibles préalablement utilisées ou stockées ne sont plus accessibles.

Par ailleurs, la technique de désactivation d'un module de paiement selon les différents modes de réalisation de l'invention permet de vérifier, à tout moment, qu'un module de paiement est bien désactivé.

Cette technique est mise en oeuvre par le module de paiement lui-même et constitue en quelque sorte une auto-désactivation vérifiable sécurisée.

Les différents modes de réalisation de l'invention décrits ci-après s'appliquent plus particulièrement à un module de paiement comprenant des mécanismes de sécurité propres à un terminal de paiement classique et capable de traiter une transaction par carte à microcircuit ou par carte virtuelle. Ce module de paiement est par exemple connecté ou intégré au terminal de communication (PC, Tablette, Smartphone...) d'un utilisateur.

Il va de soi que l'invention ne se limite pas à ce type de modules de paiement, mais s'applique également à tout dispositif devant répondre à la même problématique de désactivation sécurisée et vérifiable.

### 5.2 Description d'un mode de réalisation

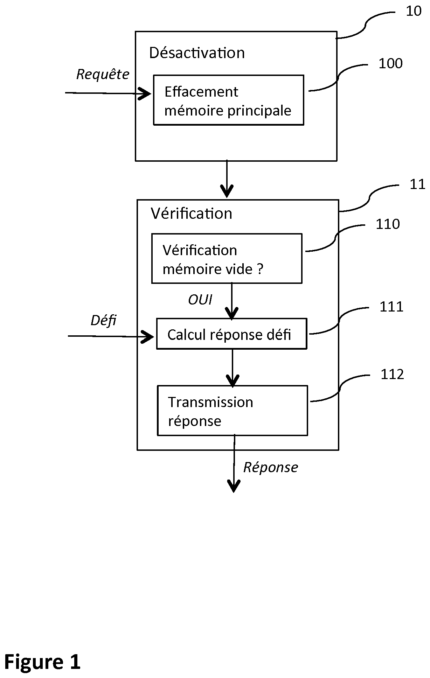

La figure 1 illustre les principales étapes d'un procédé de désactivation selon un mode de réalisation de l'invention, dans lequel un module de paiement doit être désactivé de manière sécurisée et vérifiable.

Le procédé de désactivation comprend deux phases successives : une phase 10 de désactivation et une phase 11 de vérification de la désactivation.

Dans la plupart des cas, ces deux phases se succèdent, de manière à assurer qu'un module de paiement a bien été désactivé. Il se peut également que la phase de vérification de la désactivation soit réitérée, lorsque l'on souhaite s'assurer à nouveau que le module de paiement a bien été préalablement désactivé.

La première phase de désactivation 10 consiste donc principalement à effacer, lors d'une étape 100, toutes les données stockées dans la mémoire principale du module de paiement, c'est-à-dire toutes les données sensibles nécessaires à une opération de paiement (telles que le numéro de carte bancaire de l'utilisateur, ainsi qu'éventuellement des données relatives à chacune des opérations de paiement effectuées par le module de paiement, ...).

Selon un mode de réalisation de l'invention, cette phase de désactivation 10 est déclenchée par une requête de désactivation, émise par une entité distincte du module de paiement.

Par exemple, cette entité est également intégrée au terminal de communication de l'utilisateur et correspond à un module d'administration/gestion du module de paiement, accessible par l'utilisateur et offrant notamment une fonctionnalité de désactivation du module de paiement. Ainsi, l'utilisateur du terminal de communication intégrant le module de paiement peut décider de désactiver ce dernier lorsqu'il envisage de confier son terminal de communication à un tiers. Ce module d'administration peut être dans ce cas relié à un serveur intermédiaire sécurisé (serveur passerelle) en charge de l'établissement d'un lien sécurisé entre le module de paiement et le serveur marchand, dans le cadre d'un paiement à distance.

Selon un autre exemple, l'entité correspond à ce serveur passerelle lui-même, apte à transmettre une requête de désactivation au module de paiement.

Selon un mode de réalisation particulier de l'invention, la phase de désactivation 10 n'est mise en oeuvre, après la réception de la requête de désactivation par le module de paiement, que lorsque ce dernier a préalablement vérifié que l'entité à l'origine de la requête est autorisée à requérir une telle désactivation.

Par exemple, le module de paiement peut avoir connaissance d'une ou plusieurs entités autorisées à requérir sa désactivation (sous la forme d'une liste d'identifiants en mémoire par exemple) et la requête de désactivation peut contenir un identifiant de l'entité émettrice, permettant ainsi au module de paiement de comparer cet identifiant avec ceux de sa liste. Lorsque le module de paiement ne reconnaît pas l'entité émettrice de la requête comme une entité autorisée, les phases de désactivation et de vérification ne sont pas mises en oeuvre.

Selon les différents modes de réalisation de l'invention, la mémoire principale du module de paiement se distingue d'une zone mémoire non volatile également présente dans le module de paiement, et utilisée uniquement pour stocker une donnée spécifique, appelée clé de cryptage *k*, servant à la deuxième phase de vérification de la désactivation.

Selon les différents modes de réalisation de l'invention, cette clé de cryptage *k* n'est jamais accessible en lecture et sa commande d'utilisation n'est disponible que lorsque la mémoire principale du module de paiement est entièrement vide. Ainsi, cette clé *k* ne peut pas être utilisée frauduleusement par un programme logiciel ou un module matériel pour simuler une vérification de désactivation alors que la mémoire principale du module n'est pas vide.

Lorsque la phase de désactivation 10 est terminée, une phase de vérification 11 de cette désactivation est mise en oeuvre, en commençant par une étape 110 de vérification de l'effacement de la mémoire principale.

Cette étape 110 de vérification peut mettre en oeuvre par exemple une technique connue de vérification logicielle de l'effacement d'une mémoire et délivrer un résultat de vérification, positif si la mémoire principale du module de paiement est effectivement vide, ou négatif lorsque la mémoire n'est pas vide (lorsque l'effacement a échoué ou encore lorsque l'étape d'effacement a été détournée frauduleusement de façon à ne rien effacer).

Lorsque le résultat de vérification est négatif, le module de paiement en informe l'entité à l'initiative de la désactivation. Par exemple, le module de paiement transmet un message de résultat de vérification négatif ou au contraire l'absence de message prévu dans le cas d'un résultat de vérification positif permet à l'entité d'être informée d'un résultat de vérification négatif.

Ainsi, selon un mode de réalisation de l'invention, lorsque le résultat de vérification est positif, l'entité à l'initiative de la désactivation reçoit un message de résultat de vérification positif et émet alors un défi à destination du module de paiement, pour la mise en oeuvre de l'étape suivante 111 de la phase de vérification 11.

Selon un autre mode de réalisation, un défi est transmis par l'entité à l'initiative de la désactivation au moment de la requête de désactivation par exemple, et lorsque le résultat de vérification est positif, le module de paiement met en oeuvre directement l'étape 111 de calcul d'une réponse au défi préalablement reçu.

Cette étape 111 n'est donc mise en oeuvre par le module de paiement que lorsqu'il s'est assuré au préalable que sa mémoire principale était vide. De plus, cette étape 111 ne peut concrètement être mise en oeuvre que lorsque cette mémoire principale est vide, car la clé de cryptage *k* n'est accessible, pour le calcul d'une réponse à un défi, que lorsque la mémoire principale du module de paiement est vide.

Ainsi, si cette condition n'est pas remplie, la commande d'utilisation de la clé de cryptage *k* n'est pas disponible, et le module de paiement ne peut pas calculer de réponse au défi. Dans ce cas, en l'absence de réponse, par le module de paiement, au défi préalablement transmis, l'entité à l'initiative de la désactivation comprend que la désactivation du module de paiement ne s'est pas correctement passée.

Au contraire, lorsque la mémoire principale du module de paiement a bien été entièrement effacée, l'étape 111 de calcul d'une réponse au défi peut être mise en oeuvre. Par exemple, ce calcul consiste en un cryptage du défi par la clé de cryptage *k*, rendue accessible du fait de l'effacement préalable de la mémoire principale. Ainsi, la commande d'utilisation de cette clé de cryptage *k* pour crypter le défi est disponible, et une réponse au défi peut donc être calculée.

Selon une variante de réalisation, d'autres données peuvent également être cryptées, en plus du défi, par la clé de cryptage *k.* Par exemple, des données représentatives de l'entité à l'initiative de la requête de désactivation (par exemple un identifiant de cette entité) et/ou de l'horodatage de cette requête, peuvent être cryptés avec le défi. Ces données sont connues du module de paiement via leur transmission par l'entité elle-même, ou via d'autres moyens (horodatage disponible via le terminal de communication auquel est rattaché le module de paiement par exemple).

Une fois cette réponse au défi calculée, elle est transmise, lors d'une étape 112 de transmission, à l'entité à l'initiative de la requête de désactivation. Cette entité peut ainsi vérifier que la désactivation du module de paiement s'est bien passée, si la réponse au défi correspond à celle attendue. En effet, si cette réponse est correcte, l'entité à l'initiative de la requête de désactivation peut être assurée que le module de paiement a été désactivé de manière sécurisée et qu'aucune donnée sensible n'est plus accessible via sa mémoire. Si la réponse au défi n'est pas correcte, une désactivation peut être à nouveau déclenchée ou une alerte peut être émise.

### 5.3 Description d'un exemple de module de paiement

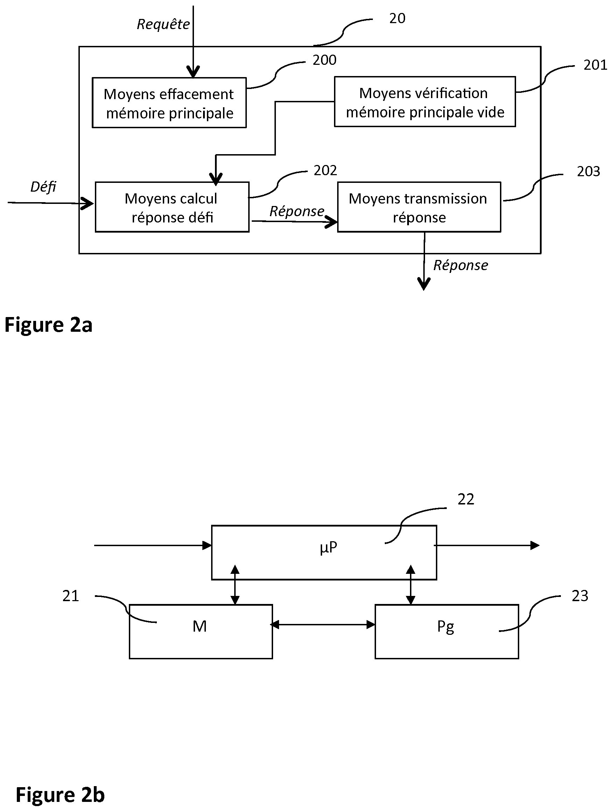

La figure 2a illustre un exemple de module de paiement 20 selon un mode de réalisation de l'invention, présentant notamment des moyens de désactivation et de vérification de cette désactivation.

Par exemple, un tel module de paiement 20, pouvant être connecté ou intégré au terminal de communication (PC, Tablette, Smartphone...) d'un utilisateur, comprend des mécanismes de sécurité propres à un terminal de paiement classique et est capable de traiter une transaction par carte à microcircuit ou par carte virtuelle. Il peut donc notamment être amené à stocker des données sensibles, comme un numéro de carte bancaire ou des données relatives à une transaction en particulier. Pour des raisons de sécurité liées au domaine bancaire, un tel module de paiement doit pouvoir être désactivé de manière sûre et vérifiable, de sorte qu'il ne puisse plus être utilisé une fois désactivé et que les données qu'il avait pu mémoriser ne soient plus accessibles.

Ainsi, selon les différents modes de réalisation de l'invention, un tel module de paiement 20 comprend des moyens 200 d'effacement de sa mémoire principale, c'est-à-dire toute la mémoire utilisée pour stocker des données sensibles (par exemple des numéros de carte bancaire, de compte bancaire, des certificats ...), ainsi que des moyens 201 de vérification de cet effacement. Ces moyens d'effacement 200 et de vérification de l'effacement 201 peuvent être mis en oeuvre par l'exécution d'un ou plusieurs programmes logiciels connus.

Par ailleurs, le module de paiement 20 présente également des moyens (non représentés) de réception d'une requête de désactivation, émise par une entité distincte (non représentée) du module de paiement 20, activant les moyens 200 d'effacement notamment.

Selon les modes de réalisation de l'invention, le module de paiement 20 présente également des moyens 202 de calcul d'une réponse à un défi préalablement reçu (par exemple via des moyens, non représentés, de réception d'un tel défi). Ces moyens 202 de calcul d'une réponse à un défi mettent en oeuvre un ou plusieurs algorithmes (connus) de cryptage du défi, à l'aide notamment d'une clé de cryptage *k* stockée dans une zone non volatile de la mémoire (non représentée) du module de paiement 20. Ces moyens 202 de calcul sont activés à réception d'un résultat de vérification positif, émis par les moyens de vérification 201 par exemple, confirmant que la mémoire principale du module de paiement 20 a bien été entièrement effacée par les moyens d'effacement 200. De plus, la commande d'utilisation de la clé de cryptage *k* n'est disponible que lorsque cette mémoire principale est effectivement vide.

Ainsi, les moyens de calcul 202 ne peuvent calculer une réponse à un défi que lorsque la mémoire principale du module de paiement 20 est vide, permettant ainsi de s'assurer que le module a bien été désactivé.

La réponse au défi est ensuite transmise, via des moyens de transmission 203, à l'entité à l'initiative de la requête de désactivation.

Une fois cette réponse transmise par le module de paiement 20, cette entité distincte du module de paiement 20 peut vérifier qu'elle correspond bien au défi préalablement transmis au module de paiement. Si tel est le cas, l'entité à l'initiative de la requête de désactivation peut être assurée que le module de paiement a été désactivé de manière sécurisée et qu'aucune donnée sensible n'est plus accessible via sa mémoire.

Toutes les caractéristiques décrites ci-dessus en relation avec les différents modes de réalisation du procédé de désactivation sont bien sûr applicables au module de paiement lui-même.

De plus, la figure 2b illustre d'une autre manière le module de paiement 20, comprenant une mémoire 21 constituée d'une mémoire tampon, une unité de traitement 22, équipée par exemple d'un microprocesseur, et pilotée par le programme d'ordinateur 23, mettant en oeuvre un procédé de désactivation selon les différents modes de réalisation de l'invention.

À l'initialisation, c'est-à-dire à la mise sous tension du terminal de communication auquel le module de paiement est rattaché, les instructions de code du programme d'ordinateur 23 sont par exemple chargées dans une mémoire avant d'être exécutées par le processeur de l'unité de traitement 22. L'unité de traitement 22 reçoit en entrée au moins une donnée représentative d'une requête de désactivation, et éventuellement un défi. Le microprocesseur de l'unité de traitement 22 met en oeuvre les étapes du procédé de désactivation, selon les instructions du programme d'ordinateur 23 pour effectuer une désactivation et une vérification de la désactivation du module de paiement 20.

Pour cela, le module de paiement 20 comprend, outre la mémoire tampon 21, des moyens de communications, tels que des modules de communication réseau, des moyens de transmission de données et éventuellement un processeur de chiffrement apte à mettre en oeuvre des algorithme de cryptographie tel que l'algorithme RSA.

Dans un mode de réalisation particulier de l'invention, le module de paiement 20 de l'utilisateur, pouvant être intégré (c'est à dire physiquement soudé ou attaché) à un Smartphone, une tablette, un ordinateur portable, un PDA, intègre des moyens de gestion de transaction (non représentés). Ces moyens peuvent se présenter sous la forme d'un processeur particulier implémenté au sein du module de paiement, ledit processeur étant un processeur sécurisé.

## Revendications

1. Procédé de désactivation d'un module de paiement rattachable à un terminal de communication, comprenant les deux phases suivantes :
• une phase de désactivation comprenant au moins une étape d'effacement de toute la mémoire dudit module de paiement à l'exception d'une zone de mémoire non volatile dans laquelle est stockée une clé de cryptage *k*, ladite mémoire effacée étant dite mémoire principale et ladite clé de cryptage *k* n'étant disponible que lorsque ladite mémoire principale dudit module de paiement est vide ;
• au moins une phase de vérification de ladite désactivation comprenant les étapes suivantes :
∘ une étape de vérification que ladite mémoire principale est vide, délivrant un résultat de vérification positif ou négatif ;
∘ si ledit résultat de vérification est positif :
▪ une étape de calcul d'une réponse à un défi préalablement reçu par ledit module de paiement en provenance d'une entité distincte dudit module de paiement, ledit calcul étant mis en oeuvre à l'aide de ladite clé de cryptage *k* ;
▪ une étape de transmission de ladite réponse à ladite entité.

2. Procédé de désactivation d'un module de paiement selon la revendication 1, **caractérisé en ce que** ladite phase de désactivation est déclenchée par la réception, par ledit module de paiement, d'au moins une requête de désactivation en provenance de ladite entité.

3. Procédé de désactivation d'un module de paiement selon l'une quelconque des revendications 1 et 2, **caractérisé en ce que** ladite clé de cryptage *k* stockée dans ladite mémoire non volatile dudit module de paiement n'est jamais accessible en lecture.

4. Procédé de désactivation d'un module de paiement selon la revendication 2, **caractérisé en ce que** ledit calcul d'une réponse à un défi utilise également au moins une donnée représentative de ladite requête de désactivation, ladite information appartenant au groupe comprenant :
• un identifiant de ladite entité ;
• un horodatage de ladite requête de désactivation.

5. Procédé de désactivation d'un module de paiement selon l'une quelconque des revendications 1 à 4, **caractérisé en ce que** ladite phase de désactivation est déclenchée après une étape de validation de l'autorisation de ladite entité à désactiver ledit module de paiement.

6. Module de paiement rattachable à un terminal de communication, comprenant des moyens de désactivation comprenant :
• des moyens d'effacement de toute la mémoire dudit module de paiement à l'exception d'une zone de mémoire non volatile dans laquelle est stockée une clé de cryptage *k*, ladite mémoire effacée étant dite mémoire principale et ladite clé de cryptage *k* n'étant disponible que lorsque ladite mémoire principale dudit module de paiement est vide ;
• des moyens de vérification que ladite mémoire principale est vide, délivrant un résultat de vérification positif ou négatif ;
• des moyens de calcul d'une réponse à un défi préalablement reçu par ledit module de paiement en provenance d'une entité distincte dudit module de paiement, ledit calcul étant mis en oeuvre à l'aide de ladite clé de cryptage *k*, lesdits moyens de calcul étant activés par un résultat de vérification positif ;
• des moyens de transmission de ladite réponse à ladite entité.

7. Programme d'ordinateur téléchargeable depuis un réseau de communication et/ou stocké sur un support lisible par ordinateur et/ou exécutable par un processeur, **caractérisé en ce qu'**il comprend des instructions de code de programme pour l'exécution du procédé selon l'une quelconque des revendications 1 à 5, lorsqu'il est exécuté par un processeur.

8. Médium de stockage lisible par ordinateur et non transitoire, stockant un programme d'ordinateur comprenant un jeu d'instructions exécutables par un ordinateur ou un processeur pour mettre en oeuvre le procédé selon l'une quelconque des revendications 1 à 5.

## Patentansprüche

1. Verfahren zum Deaktivieren eines Zahlungsmoduls, das mit einem Kommunikationsendgerät verbunden werden kann, umfassend die zwei folgenden Phasen:
• eine Phase des Deaktivierens, umfassend mindestens einen Schritt des Löschens des gesamten Speichers des Zahlungsmoduls mit Ausnahme eines nichtflüchtigen Speicherbereichs, in dem ein Verschlüsselungsschlüssel k gespeichert wird, wobei der gelöschte Speicher der Hauptspeicher ist und der Verschlüsselungsschlüssel k nur verfügbar ist, wenn der Hauptspeicher des Zahlungsmoduls leer ist,
• mindestens eine Überprüfungsphase des Deaktivierens, umfassend die folgenden Schritte:
∘ einen Überprüfungsschritt, dass der Hauptspeicher leer ist, was ein positives oder negatives Überprüfungsergebnis bereitstellt,
∘ wenn das Überprüfungsergebnis positiv ist:
▪ einen Schritt des Berechnens einer Antwort auf eine Aufgabe, die zuvor von dem Zahlungsmodul von einer separaten Einheit des Zahlungsmoduls empfangen wird, wobei das Berechnen mit Hilfe des Verschlüsselungsschlüssels k umgesetzt wird,
▪ einen Schritt des Übertragens der Antwort an die Einheit.

2. Verfahren zum Deaktivieren eines Zahlungsmoduls nach Anspruch 1, **dadurch gekennzeichnet, dass** die Phase des Deaktivierens durch das Empfangen durch das Zahlungsmodul von mindestens einer Deaktivierungsanfrage von der Einheit ausgelöst wird.

3. Verfahren zum Deaktivieren eines Zahlungsmoduls nach einem der Ansprüche 1 und 2, **dadurch gekennzeichnet, dass** der Verschlüsselungsschlüssels k, der in dem nichtflüchtigen Speicher des Zahlungsmoduls gespeichert wird, niemals zum Lesen zugänglich ist.

4. Verfahren zum Deaktivieren eines Zahlungsmoduls nach Anspruch 2, **dadurch gekennzeichnet, dass** das Berechnen einer Antwort auf eine Aufgabe auch mindestens ein Datum verwendet, das für die Deaktivierungsanfrage repräsentativ ist, wobei die Information zu der Gruppe gehört, umfassend:
• eine Kennung der Einheit,
• einen Zeitstempel der Deaktivierungsanfrage.

5. Verfahren zum Deaktivieren eines Zahlungsmoduls nach einem der Ansprüche 1 bis 4, **dadurch gekennzeichnet, dass** die Phase des Deaktivierens nach einem Validierungsschritt der Genehmigung der Einheit, das Zahlungsmodul zu deaktivieren, ausgelöst wird.

6. Zahlungsmodul, das mit einem Kommunikationsendgerät verbunden werden kann, umfassend Deaktivierungsmittel, umfassend:
• Mittel zum Löschen des gesamten Speichers des Zahlungsmoduls mit Ausnahme eines nichtflüchtigen Speicherbereichs, in dem ein Verschlüsselungsschlüssel k gespeichert ist, wobei der gelöschte Speicher der Hauptspeicher ist und der Verschlüsselungsschlüssel k nur verfügbar ist, wenn der Hauptspeicher des Zahlungsmoduls leer ist,
• Mittel zum Überprüfen, dass der Hauptspeicher leer ist, was ein positives oder negatives Überprüfungsergebnis bereitstellt,
• Mittel zum Berechnen einer Antwort auf eine Aufgabe, die zuvor von dem Zahlungsmodul von einer separaten Einheit des Zahlungsmoduls empfangen wird, wobei das Berechnen mit Hilfe des Verschlüsselungsschlüssels k umgesetzt wird, wobei die Mittel zum Berechnen durch ein positives Überprüfungsergebnis aktiviert werden,
• Mittel zum Übertragen der Antwort an die Einheit.

7. Computerprogramm, das von einem Kommunikationsnetzwerk heruntergeladen werden kann und/oder auf einem computerlesbaren Medium gespeichert ist und/oder von einem Prozessor ausführbar ist, **dadurch gekennzeichnet, dass** es Programmcodeanweisungen zum Ausführen des Verfahrens nach einem der Ansprüche 1 bis 5 aufweist, wenn es von einem Prozessor ausgeführt wird.

8. Computerlesbares und nichtflüchtiges Speichermedium, das ein Computerprogramm speichert, das einen Satz von Befehlen aufweist, die durch einen Computer oder einen Prozessor ausgeführt werden können, um das Verfahren nach mindestens einem der Ansprüche 1 bis 5 umzusetzen.

## Claims

1. Method for deactivating a payment module attachable to a communications terminal, comprising the following two phases:
• a phase for deactivating comprising at least one step for erasing the entire memory of the payment module, called a main memory, with the exception of a non-volatile memory zone in which an encryption key *k* is stored, said encryption key *k* being available only when the main memory of the payment module is empty;
• at least one phase for verifying said deactivation comprising the following steps:
∘ a step for verifying that said main memory is empty, delivering a positive or negative result of verification;
∘ if said result of verification is positive:
▪ a step for computing a response to a challenge preliminarily received by said payment module from an entity distinct from said payment module, said computation being implemented by means of said encryption key *k*;
▪ a step for transmitting said response to said entity.

2. Method for deactivating a payment module according to claim 1, **characterized in that** said phase for deactivating is triggered by the reception, by said payment module, of at least one request for deactivation coming from said entity.

3. Method for deactivating a payment module according to any one of the claims 1 and 2, **characterized in** said encryption key *k* stored in said non-volatile memory of said payment module is never accessible in read mode.

4. Method for deactivating a payment module according to claim 2, **characterized in that** said computation of a response to a challenge also uses at least one piece of data representing said request for deactivation, sais piece of information belonging to the group comprising:
• an identifier of said entity;
• a timestamp of said request for deactivation.

5. Method for deactivating a payment module according to any one of the claims 1 to 4, **characterized in that** said phase for deactivating is triggered after a step for validating the authorization of said entity to deactivate said payment module.

6. Payment module attachable to a communications terminal comprising means of deactivation comprising:
• means for erasing the entire memory of said payment module, called a main memory, except for a non-volatile memory zone in which there is stored an encryption key *k,* said encryption key *k* being available only when said main memory of said payment module is empty;
• means for verifying that said main memory is empty, delivering a positive or negative result of verification;
• means for computing a response to a challenge preliminarily received by said payment module, coming from an entity distinct from said payment module, said computation being implemented by means of said encryption key *k,* said computation means being activated by a positive result of verification;
• means for transmitting said response to said entity.

7. Computer program downloadable from a communications network and/or stored in a computer-readable carrier and/or executable by a processor, **characterized in that** it comprises program code instructions for executing any one of the claims 1 to 5, when it is executed by a processor.

8. Computer-readable and non-transient storage medium storing a computer program comprising a set of instructions executable by a computer or a processor to implement the method according to any one of the claims 1 to 5.
